# EUROPÄISCHE PATENTSCHRIFT

(11) **EP 2 327 617 B1**
(45) Veröffentlichungstag und Bekanntmachung des Hinweises auf die Patenterteilung: **17.04.2019**
(21) Anmeldenummer: 10014770.1
(22) Anmeldetag: 19.11.2010
(51) Int. Cl.: B62M 11/16, B62M 11/18, F16H 3/66

(54) **Mehrgang-Getriebenabe für Fahrräder**
Multiple gear hub for bicycles
Engrenage à filetage multiple pour vélos

(30) Priorität: 28.11.2009 DE 102009056206
(43) Veröffentlichungstag der Anmeldung: 01.06.2011
(73) Patentinhaber: SRAM Deutschland GmbH, 97424 Schweinfurt (DE)
(72) Erfinder: Göbel, Joachim, 97279 Prosselsheim (DE)
(74) Vertreter: Weickmann & Weickmann PartmbB

(56) Entgegenhaltungen:
- DE-A1- 19 720 794
- GB-A- 2 251 276
- US-A1- 2001 041 641
- NADEL B A ET AL: "AUTOMOBILE TRANSMISSION DESIGN AS A CONSTRAINT SATISFACTION PROBLEM: MODELLING THE KINEMATIC LEVEL", ARTIFICIAL INTELLIGENCE FOR ENGINEERING DESIGN, ANALYSIS ANDMANUFACTURING, LONDON, GB, Bd. 5, Nr. 3, 1. Januar 1991 (1991-01-01), Seiten 137-171, XP008032722,

## Beschreibung

Die Erfindung betrifft eine Mehrgang-Getriebenabe für Fahrräder mit Planetengetrieben. Diese Planetengetriebe haben schon eine lange Entwicklungsgeschichte hinter sich und sind mittlerweile mit bis zu 14 Gangstufen ausgerüstet, wobei jede Gangstufe einem einschaltbaren und damit auswählbaren Momentenpfad durch die Planetengetriebemechanik entspricht. Ein großer Vorteil von Fahrrad-Getriebenaben gegenüber Fahrrad-Kettenschaltungen ist ihre Anspruchslosigkeit in Hinsicht auf Wartung infolge der Anordnung der Getriebemechanik innerhalb der Nabenhülse und ihre einfache Handhabbarkeit durch die Bedienung an einem einzigen Schalter. Andererseits stellen Getriebenaben komplizierte mechanische Gebilde dar, die einen hohen Fertigungsaufwand bedingen. Ziel der vorliegenden Erfindung ist eine vereinfachte Konstruktion, die geringere Anforderungen an Fertigung und Montage stellen.

Erreicht wird dieses Ziel durch eine Mehrzahl von miteinander in Zusammenhang stehenden Ansätzen.

Eine größere Anzahl von Gangstufen wird in Planetengetrieben durch verschiedene Maßnahmen erreicht.

Eine Möglichkeit besteht darin, dass man unterschiedliche Getriebeelemente als Eingang oder als Ausgang nutzt, was der Nutzung unterschiedlicher Momentenpfade durch das Getriebe entspricht. Zum Beispiel kann der Planetenradträger als Eingang des Getriebes mit der Kopplung zum Antreiber, der ein Kettenritzel aufweist, genutzt werden, wobei das Hohlrad den Ausgang des Getriebes mit einer Kopplung zur Nabenhülse aufweist. Diese Getriebebauform stellt ein Schnellganggetriebe bzw. Overdrive-Getriebe dar. Wählt man die Alternative mit dem Hohlrad als Eingang des Getriebes und den Planetenradträger als Ausgang des Getriebes, erhält man ein Berggang-Getriebe bzw. Underdrive-Getriebe. Um das Übersetzungsverhältnis 1:1 mit dem Direktgang zu erhalten, verläuft der Drehmomentenpfad vom Getriebeeingang zum Getriebeausgang entlang derselben mitdrehenden Getriebekomponente, oder das Getriebe wird durch eine Verblockung unwirksam gemacht, bei der dann alle Getriebekomponenten als "Block" gemeinsam umlaufen. Als Mittel für die Verblockung kommen sowohl Klauenkupplungen als auch Klinken in Freilaufkupplungen in Frage. Der Direktgang wird allgemein als eine Option genutzt. Die Nutzung dieser 3 Möglichkeiten in einem Getriebe mit einem einzigen Planetenradsatz führt zu Dreigangnaben der gängigen Bauform.

Bei einem reinen Overdrive-Planetengetriebe wie in der EP 0 679 570 können nur etwa 3 - 4 Gänge realisiert werden. Sie erfordern Primärübersetzungen am Kettentrieb von der Tretkurbel zum Ritzel am Antreiber der Getriebenabe von 1:1 oder sogar 1:1,2. Bei einer großen Getriebe-Entfaltung, d.h. bei einer großen zurückgelegten Wegstrecke pro Kurbelumdrehung, treten dadurch sehr hohe Momente auf. Diese können nur von hoch belastbaren Bauteilen in der Getriebenabe aufgenommen werden, die durch größere Baubreiten oder höher belastbare Werkstoffe realisiert werden können. Das aber begrenzt wiederum die Gangzahl durch die Baubreite und/oder erhöht die Herstellkosten.

Eine weitere Möglichkeit zur Erzielung einer größeren Zahl von mehreren Gangstufen besteht in der Nutzung von mehreren Sätzen von Planetenrädern in einem Planetenradträger. Dabei können benachbarte Planetenräder gekoppelt sein und sogenannte Stufenplanetenräder bilden. Die Planetenräder eines Planetenradsatzes müssen nicht zwangsläufig gleichzeitig mit dem zugeordneten Sonnenrad und dem zugeordneten Hohlrad in Eingriff stehen und miteinander kämmen. Es kann zum Beispiel ein Planetenradsatz eines Satzes von Stufenplanetenrädern mit dem Sonnenrad in Eingriff stehen, während die anderen Planetenräder der Stufenplanetenräder mit dem Hohlrad in Eingriff stehen. In dieser Anordnung hat das Planetengetriebe zwei Getriebestufen.

Schließlich können verschiedene Planetenradsätze eines zweistufigen Planetengetriebes auch mit verschiedenen, in Achsrichtung voneinander getrennten Hohlrädern kämmen. Ein Beispiel dafür ist die Getriebenabe in der US 3,973,451.

Die Anordnung von mehreren Getriebemodulen in Reihe oder in komplexeren Koppelstrukturen stellt eine weitere Möglichkeit dar. Dabei stehen alle Möglichkeiten der direkten Kopplung zur Verfügung, nämlich Planetenradträger mit Planetenradträger, wie in der gattungsgemäßen DE 41 42 867, Hohlrad mit Hohlrad sowie Hohlrad mit Planetenradträger, wie in einem alternativen Ausführungsbeispiel der DE 41 42 867. Die Getriebestufen sind modular getrennt, zum Beispiel durch die Nutzung von zwei Planetenradträgern, die permanent gekoppelt sind.

Die Ausbildung als sogenanntes Planetenkoppelgetriebe stellt eine Sonderform der Kopplung dar, bei der zum Beispiel das Sonnenrad gleichzeitig das Hohlrad oder der Planetenradträger des axial benachbarten Getriebesatzes ist. Beispiele dafür finden sich in der DE 197 45 419.

Auf die Verwendung von Zwischenrädern zwischen Planetenrädern und Hohlrad oder zwischen Planetenrädern und dem Sonnenrad wurde auf dem Gebiet der Fahrrad-Getriebenaben bisher verzichtet.
1. Ein erster Aspekt der Erfindung besteht darin, gegenüber der zweistufigen Lösung der US 3,973,451 eine größere Ganganzahl sowie eine bessere Steuerbarkeit beim Gangumschalten zu ermöglichen. Das wird durch die Anordnung einer größeren Anzahl von Planetenradsätzen, durch Umschaltprozesse ausschließlich durch das Festsetzen der gegenüber der Nabenachse drehbaren Sonnenräder an der Nabenachse mit geeigneten Einwegkupplungen sowie durch die Wahl von bestimmten Zähnezahlen der einzelnen Planetenradsätze erreicht.
2. Ein zweiter Aspekt der Erfindung liegt in der Wahl von so großen Zähnezahlen für die Sonnenräder, dass die Steuerelemente für das Festsetzen der Sonnenräder gegenüber der Nabenachse auf demselben axialen Abschnitt angeordnet werden können, auf dem sich auch die Planetenradverzahnung befindet. Dadurch wird eine in Axialrichtung gedrungene und kompakte Bauform erreicht.
   In der EP 0 383 350, in der EP 0 679 570, in der EP 1 132 287 sowie in der DE 41 42 867 sind Getriebenaben offenbart, in denen die Mittel zum Festsetzen der Sonnenräder gegenüber der Nabenachse in einem anderen axialen Abschnitt als die Planetenradverzahnung angeordnet ist.
3. Ein dritter Aspekt besteht darin, dass eine Getriebestufe eine feine Gangabstufung und die andere Getriebestufe eine grobe Gangabstufung aufweist. Dieser Aspekt wird dadurch erfüllt, dass die Zähnezahlen der zwei Getriebestufen I und II, die je aus einem Sonnenrad, mit diesen Sonnerädern kämmenden Planetenrädern eines Planetenradsatzes sowie einem zugeordneten Hohlrad bestehen, entsprechend gewählt werden.
   Als Wert für die Abstufung dient dabei die Differenz der benachbarten Übersetzungsverhältnisse delta i, die auch als Gangsprung bezeichnet und in Prozent ausgedrückt wird. Bei einer feinen Abstufung ist dieser Wert klein, bei einer groben Abstufung ist dieser Wert groß.
   Bei einer Reihenschaltung der Getriebestufen ergeben sich die Gesamtübersetzungen der Getriebeanordnung aus den Produkten der miteinander kombinierten Getriebestufenübersetzungen. Bei entsprechender Wahl der Getriebestufenübersetzungen gibt es in Bezug auf die sich ergebenden Gesamtübersetzungen keine oder nur wenige Überschneidungen. Im Idealfall können alle Gesamtübersetzungen genutzt werden. Das ist möglich mit einer Getriebestufe relativ weit auseinander liegende Getriebestufenübersetzungen ("grob abgestuft"), und mit der anderen Getriebestufe sehr eng beieinander liegende Getriebestufenübersetzungen ("fein abgestuft").
   Die DE 41 42 867, die als bevorzugtes Ausführungsbeispiel eine Siebengang-Nabe zeigt, verfolgt einen anderen Ansatz, denn dort gibt es keine feine und grobe Abstufung von Getriebestufenübersetzungen. Vielmehr sind dort die Werte der Getriebestufenübersetzungen in beiden Getriebestufen etwa gleich weit voneinander entfernt. Bei zwei Getriebestufen mit 3 und 4 Getriebestufenübersetzungen werden nur 9 bzw. bei zwei Getriebestufen mit jeweils 3 Getriebestufenübersetzungen werden nur 7 Gesamtübersetzungen erzielt, weil es Überschneidungen der Gesamtübersetzungen gibt und der dritte Aspekt der Erfindung noch nicht angewandt wurde.
   In der EP 1 132 287 wird schon eine Mehrgang-Getriebenabe gezeigt, die über feine und grobe Abstufung von Getriebestufenübersetzungen verfügt.
4. Ein vierter Aspekt der Erfindung ist, dass in einer Getriebestufe mit feiner Abstufung bewusst auf die Nutzung einer Getriebestufenübersetzung mit dem Wert 1, also auf den Direktgang verzichtet wird.
   Bezieht man bei der Verwirklichung einer feinen Abstufung in einer Getriebestufe entsprechend des dritten Aspektes der Erfindung den Direktgang mit dem Übersetzungsverhältnis 1:1 mit ein, gibt der Wert für die erste Abstufung zwischen Direktgang und benachbarter Gangstufe vor, wie groß der Wert auch für die anderen Abstufungen sein muss. Ist dieser Wert groß, stößt man bei der Auslegung der Getriebestufe mit der feinen Abstufung schnell an Grenzen.
   Die Werte für die Getriebestufenübersetzung eines einzelnen Planetenradsatzes, dessen Planetenräder sowohl mit einem Sonnenrad, als auch mit einem Hohlrad in Eingriff stehen, sind begrenzt. Im Fall eines Overdrive-Getriebesatzes liegen die Getriebestufenübersetzungen im Bereich größer als 1 und kleiner als 2, sowie im Fall eines Underdrive-Getriebesatzes im Bereich kleiner als 1 und größer als 0,5.
   Da die Getriebestufenübersetzungen nahe zu den Grenzwerten 0,5 und 2 besonders kleine Planetenräder erfordern, sind hier Grenzen gesetzt, man kann sich diesen Werten nicht beliebig nähern, und man ist mit besonderen Zwangsbedingungen konfrontiert.
   Mit dem bewussten Vermeiden der Getriebestufenübersetzung 1:1 in der Getriebestufe mit der feinen Abstufung, entfallen diese Zwangsbedingungen zum Teil.
   Bezogen auf eine Underdrive-Getriebestufe heißt das, dass dann keine Getriebestufenübersetzungen nötig sind, die nur geringfügig unter dem Wert 1 liegen, was sehr kleine Sonnenräder erfordern würde. Selbst wenn man 3 oder 4 gleichmäßig abgestufte Getriebestufenübersetzungen erzielen will, sind diese mit geringem Abstand wählbar. Eine Anwendung des vierten Aspektes ist auch bei einer Underdrive-Getriebestufe möglich.
   Das heißt anders ausgedrückt, dass eine Getriebestufe mit mehreren fein abgestuften Getriebestufenübersetzungen, in der die Direktgang-Getriebestufenübersetzung mit dem Übersetzungsverhältnis 1:1 nicht genutzt wird, der Abstand zwischen allen unmittelbar benachbarten Getriebestufenübersetzungen, die ungleich 1:1 sind, einen deutlich geringeren Wert hat, als der Wert des Abstandes zwischen dem Übersetzungsverhältnis 1:1 und der dem Übersetzungsverhältnis 1:1 benachbarten Getriebestufenübersetzung.
   Mit der Realisierung des vierten Aspekts in Verbindung mit dem dritten Aspekt lässt sich auch der zweite Aspekt der Erfindung realisieren. Die Sonnenräder können noch radial so groß ausgebildet werden, dass zwischen Nabenachse und Sonnenrad Kupplungselemente Platz finden, wobei das jeweilige Sonnenrad einschließlich dieser Kupplungselemente axial nicht länger ausgebildet sein muss, als die Verzahnung an den zugeordneten Planetenrädern, die mit diesem Sonnenrad in Eingriff sind.
   Die entsprechend des vierten Aspektes bereitgestellten Getriebestufenübersetzungen liegen eng beieinander und sind für sich allein in einer Fahrrad-Getriebenabe wenig nützlich. Der Übersetzungsbereich wäre zu eng. Damit es zu einem nützlich anwendbaren Übersetzungsbereich kommt, wird eine Getriebeanordnung gemäß dem ersten Aspekt genutzt. In dieser Getriebeanordnung wird eine Underdrive- beziehungsweise Berggang-Getriebestufe, ausgestattet mit einem oder mehreren Planetenradsätzen sowie mit angetriebenem Hohlrad und der Getriebestufen-Übersetzung ins Langsame kombiniert mit einer Overdrive- beziehungsweise Schnellgang-Getriebestufe mit einer oder mit mehreren Planetenradsätzen, mit abtreibendem Hohlrad und der Getriebestufen-Übersetzung ins Langsame kombiniert. Dabei ergeben sich die Gesamtübersetzungen als Produkt der jeweiligen Getriebestufen-Übersetzungen, die gut abgestuft und damit vorteilhaft nutzbar sind.
5. Ein fünfter Aspekt der Erfindung liegt darin, dass die Underdrive-Planetengetriebestufe am Eingang und die Overdrive-Planetengetriebestufe am Ausgang der Gesamtgetriebeanordnung angeordnet ist. Damit ist die Berggang-Getriebestufe mit dem Antreiber und die Schnellgang-Getriebestufe mit der Nabenhülse gekoppelt.
   Damit geht einher, dass für die Kopplung der zweiten Getriebestufe mit der Nabenhülse außer den steuerbaren Sonnenradkupplungen keine weiteren steuerbaren Kupplungen notwendig sind.
   Mit der Verwirklichung des fünften Aspekts ist die erfindungsgemäße Getriebenabe auch im Einklang mit dem genannten ersten Aspekt der Erfindung, der Weiterentwicklung der Lösung aus der US 3,973,451, in der die Radpaarungen der zwei Getriebestufen in einem einzigen Planetenradträger untergebracht werden können. Vom erfinderischen Ansatz wird aber auch nicht abgewichen, wenn die zwei Getriebestufen mit zwei drehfest gekoppelten Planetenradträgern gebildet wären.
   Wäre die Reihenfolge von Berggang- und Schnellganggetriebestufe vertauscht, müsste eine Kopplung an den Hohlrädern vorgenommen werden, oder es müsste ein gemeinsames Hohlrad ausgebildet sein. Mit einer solchen Anordnung lassen sich auch noch Vorteile der Erfindung nutzen, wenn auch zusätzlich die Notwendigkeit einer zusätzlichen Steuerfunktion an der Klinke zwischen Hohlrad und Nabenhülse besteht.
6. Ein sechster Aspekt, der unmittelbar aus dem vierten Aspekt folgt, liegt darin, dass für das Erzielen von mehreren Getriebeübersetzungen in Vorwärtsdrehrichtung keine axial zu verschiebenden Kupplungselemente vorgesehen sein müssen, wie zum Beispiel in der EP 0 383 350 sowie in der EP 1 132 287.
   In der EP 1 132 287 ist eine Getriebenabe gezeigt, die über eine Getriebestufe mit feinerer Abstufung (die abtriebsseitige Getriebestufe) sowie über eine Getriebestufe mit gröberer Getriebestufen-Übersetzung verfügt (die antriebsseitige Getriebestufe). Die antriebsseitige Getriebestufe nutzt auch den Direktgang, wozu eingangsseitig ein wahlweises Koppeln von Planetenradträger oder Hohlrad mit dem Antreiber notwendig ist. Dadurch ergibt sich eine Reduzierung des baulichen Aufwandes, und es wird kein Bauraum in axialer Richtung benötigt.
7. Ein siebter Aspekt besteht in der rotatorischen Ansteuerung von Koppelelementen zwischen Sonnenrädern und Nabenachse.
   Für die Einleitung einer Schaltbewegung in die Getriebenabe stehen grundsätzlich eine rotatorische und eine translatorische Bewegung zur Auswahl. Besteht die Forderung, sowohl translatorisch zu bewegende, als auch rotatorisch zu bewegende Schalt- oder Koppelelemente bei den Umschaltprozessen zu betätigen, muss eine Bewegungsumwandlung stattfinden. Die dafür vorzusehenden Mechanismen-Elemente erfordern viel Platz, der nicht mehr für andere Anforderungen zur Verfügung steht. Deshalb ist vorteilhaft, nur translatorisch oder nur rotatorisch zu bewegende Schaltelemente zu verwenden. Dieses Prinzip ist bei der erfindungsgemäßen Nabe umgesetzt. Es werden nur rotatorisch zu bewegende Steuerelemente für Klinken benutzt, die in radialer Richtung zu steuernde Klinken außer Eingriffsbereitschaft bringen.
   Damit wird auch möglich, die Überleitung der Schaltbetätigung von einem Schaltseilzug in die Nabe innerhalb der die Nabenachse aufnehmenden Ausfallenden am Fahrrad vornehmen zu können. Das sich gegenüber der Nabenachse beim Schaltvorgang drehende Teil erfordert in axialer Richtung wenig Bauraum.
   Dieser Ansatz führt zu einem einfachen Getriebeaufbau, wobei nur Eingriffselemente an den Sonnenrädern in radialer Richtung ausgesteuert werden, wobei ihr Eingriff an einer Verzahnung verhindert wird.
8. Der achter Aspekt der Erfindung liegt in der Nutzung von Koppelelementen zwischen Sonnenrädern und Nabenachse, die auch dann nur eine geringe Betätigungskraft erfordern, wenn das von der Nabenachse auszukoppelnde Sonnenrad unter Belastung steht.

Die Funktion der bevorzugten Ausführungsbeispiele der Erfindung wird nun an Hand der Figuren detailliert beschrieben.
- Fig. 1: zeigt das Getriebeschema der bevorzugten Ausführungsform der Erfindung mit 9 Gangstufen.
- Fig. 2: zeigt einen Längsschnitt durch die Mittelachse der Nabenachse mit Sonnenrädern und Kupplungen zwischen Nabenachse und Sonnenrädern.
- Fig. 3: zeigt einen Schnitt senkrecht zur Nabenachse durch die Anordnung eines Sonnenrades mit zugehöriger Kupplung und Schalthülse.
- Fig. 4: zeigt eine alternative Ausführung der erfindungsgemäßen Getriebenabe, in der die erste Getriebestufe und die zweite Getriebestufe ein gemeinsames Hohlrad aufweisen.

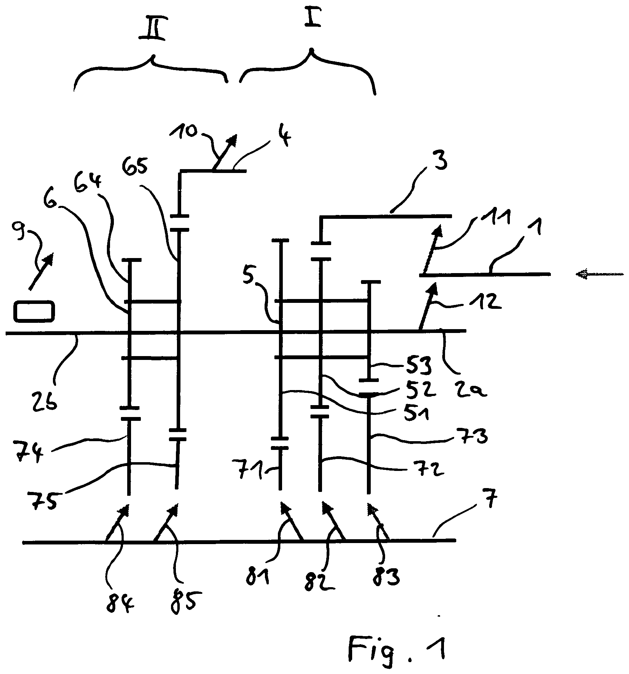

Die Figur 1 zeigt eine Prinzipdarstellung der bevorzugten Ausführungsform der erfindungsgemäßen Getriebenabe, in der nur eine Hälfte oberhalb der Nabenachse 7 einschließlich der Nabenachse 7 dargestellt ist. Die Nabenhülse ist nicht gezeigt.

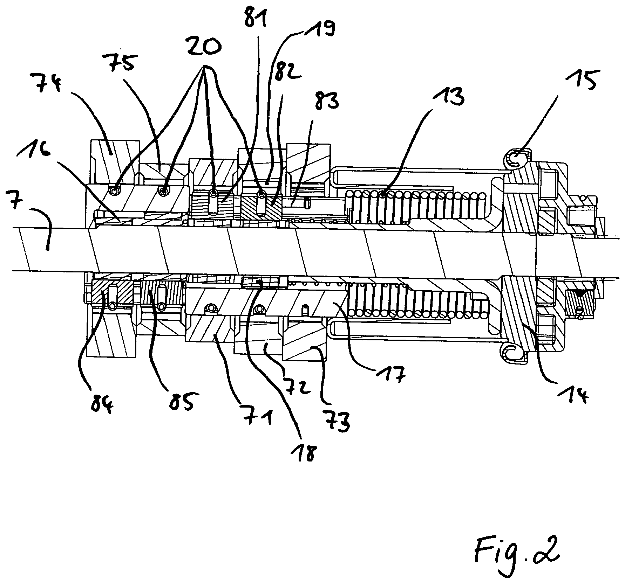

Die Antriebsbewegung wird am Antreiber 1 eingeleitet, wobei eine Drehmitnahme bei Vorwärts-Drehbewegung durch die Antreiberfreilaufkupplung 11 hin zum Eingang der ersten Getriebestufe I am ersten Hohlrad 3 erfolgt. Der Planetenradträger 2a, 2b trägt das erste Stufenplanetenrad 5 sowie das zweite Stufenplanetenrad 6. Das erste Stufenplanetenrad 5 weist ein erstes Planetenrad 51, ein zweites Planetenrad 52 sowie ein drittes Planetenrad 53 auf, die drehfest miteinander verbunden sind. In der Schnittdarstellung gemäß Fig. 2 ist jeweils nur ein Planetenrad 51, 52 bzw. 53 erkennbar. Selbstverständlich sind noch weitere, in Umfangsrichtung beabstandete Planetenräder, die zu einem Planetenradsatz gehören, im Planetenradträger 2a, 2b aufgenommen, die alle gleichzeitig mit demselben Sonnenrad in Eingriff stehen. Den Planetenrädern 51, 52 und 53 sind jeweils das erste Sonnenrad 71, das zweite Sonnenrad 72 sowie das dritte Sonnenrad 73 zugeordnet. Die Sonnenräder können gegenüber der Nabenachse 7 durch den Sonnenrädern zugeordnete steuerbare Sonnenradkupplungen 81, 82, 83 drehfest gemacht werden, die als Freilaufkupplungen ausgebildet sind. Dadurch stellen sich dann entsprechende Übersetzungsverhältnisse der ersten Getriebestufe I ein. Da in der ersten Getriebestufe I das erste Hohlrad 3 in Vorwärtsdrehrichtung angetrieben wird, müssen die Sonnenradkupplungen 81, 82, 83 die Sonnenräder gegenüber einer Drehung in Rückwärtsdrehrichtung abstützen.

In das Übersetzungsverhältnis gehen die Zähnezahlen des ersten Hohlrads 3, von den Planetenrädern 51, 52, 53 sowie der Sonnenräder 71, 72, 73 ein.

Die Kupplung am größten Sonnenrad 73 muss nicht geschaltet werden. Die als Freilauf wirkende Sonnenradkupplung 83 wird automatisch überlaufen, wenn eine Sonnenradkupplung 81, 82 eines kleineren Sonnenrades 71, 72 dieses Sonnenrad 71, 72 drehfest zur Nabenachse 7 macht. Da in der ersten Getriebestufe I keine 1:1-Übersetzung genutzt wird und demzufolge immer eine Getriebestufe wirksam sein muss, ist in allen Schaltzuständen mindestens ein Sonnenrad drehfest zur Nabenachse 7 zu machen. Dabei handelt es sich um das größte Sonnenrad 81.

Die erste Getriebestufe I ist eine Underdrive-Getriebstufe, denn die Drehzahl am ersten Hohlrad 3 ist größer als am Planetenradträger 2a.

Die zweite Getriebestufe II mit dem Planetenradträger 2b, dem zweiten Stufenplanetenrad 6, den Sonnenrädern 74, 75 und dem zweiten Hohlrad 4 ist ebenso aufgebaut wie die erste Getriebestufe. Sie ist allerdings eine Overdrive-Getriebestufe, denn die Abtriebsdrehzahl am Getriebeausgang, dem zweiten Hohlrad 4, ist größer als die Drehzahl am Getriebeeingang, dem Planetenradträger 2b.

Die Einstellung eines Übersetzungsverhältnisses erfolgt durch steuerbare Sonnenradkupplungen 84, 85, die ebenfalls als Freiläufe ausgebildet sind und das jeweilige Sonnenrad 74, 75, drehfest in Bezug auf eine Vorwärtsdrehrichtung gegenüber der Nabenachse 7 machen. Der Abtrieb erfolgt am zweiten Hohlrad 4, wenn eines der Sonnenräder 74, 75 drehfest zur Nabenachse 7 gemacht ist. Sind beide Sonnenräder frei drehbar, erfolgt der Abtrieb am Planetenradträger 2b, der einen Planetenradfreilauf 9 hin zur nicht dargestellten Nabenhülse aufweist.

Der Planetenradträger 2a, 2b dient dazu, die Rückwärtsdrehbewegung zu einer nicht dargestellten Rücktrittbremse zu übertragen. Die Rücktrittbetätigung wird ebenfalls wie die Vorwärts-Antriebsdrehbewegung am Antreiber 1 eingeleitet. Ein rückwärts einkoppelnder Bremsfreilauf ist zwischen Antreiber 1 und Planetenradträger 2a angeordnet. Damit bei einer Bremsbetätigung das dann schneller als der Planetenradträger nach rückwärts laufende erste Hohlrad 3 nicht ein Blockieren des Getriebes bewirkt, muss die Antreiberfreilaufkupplung 11 bei einer Rückwärtsdrehung ausgeschaltet werden.

Ist die Getriebenabe ohne Rücktrittbremse ausgebildet, dann entfällt die Notwendigkeit zum Ausschalten der Antreiberfreilaufkupplung 11 bei einer Rückwärtsdrehung. Der Antreiber 1 könnte dann gemeinsam mit dem ersten Hohlrad 4 als integrales Teil ausgeführt werden.

Bei einer Ausführung mit Rücktrittbremse nimmt der Bremsfreilauf den Planetenradträger in Rückwärtsdrehrichtung mit, wodurch die Rücktrittbremse angesteuert wird. Die Rücktrittbremse kann als Rollenbremse, in der Rollen auf Steigfeldern Bremsbacken nach radial außen bewegen, oder als Konusbremse, in der ein axial bewegter Konus die Bremsbacken radial aufspreizt, ausgebildet sein.

Die Bremsbetätigung erfolgt mit einer direkten Weiterleitung der Betätigungsbewegung am Antreiber unabhängig vom ausgewählten Gesamt-Übersetzungsverhältnis für die Vorwärtsdrehung.

Die Prinzipskizze in Fig. 1 stellt eine 9-Gang-Ausführung mit Rücktrittbremse dar. Die maximal 9 Gänge dieser Ausführung ergeben sich durch die Multiplikation der 3 Getriebestufenübersetzungen der Underdrive-Getriebestufe I mit den 3 möglichen Zuständen der Overdrive-Getriebestufe II.

### Die 3 Schaltzustände der Getriebestufe I sind:

1. Festgelegtes erstes Sonnenrad 71;
2. Festgelegtes zweites Sonnenrad 72;
3. Festgelegtes drittes Sonnenrad 73.

### Die 3 Schaltzustände der Getriebestufe II sind:

1. Festgelegtes viertes Sonnenrad 74
2. Festgelegtes fünftes Sonnenrad 75
3. Sowohl Sonnenrad 74 als auch Sonnenrad 75 nicht festgelegt.

Je nach Zähnezahlen und sich dadurch ergebenden Gangsprüngen kann man natürlich auch mögliche Zustände bewusst nicht nutzen und eine 7- oder 8-Gangnabe aus dem 9-Gangprinzip ableiten.

Reduziert man z. B. die Getriebestufe I auf zwei Planetenstufen, erhält man eine weitere Vereinfachung, aber nur maximal 6 mögliche Gangabstufungen.

Erweitert man z. B. die Getriebestufe II auf drei Planetenstufen, erhält man maximal 12 mögliche Gangabstufungen. Durch die Anzahl der Planetenstufen innerhalb der zwei Getriebestufen I und II ergibt sich also die Anzahl der maximal möglichen Gänge. Auch andere Gangauslegungen sind denkbar.

Vorteilhaft bei der bevorzugten Ausführungsform ist, dass weder am Eingang von Getriebestufe I noch am Ausgang von Getriebestufe II Mittel zum ganggemäßen Umschalten von Klinken oder anderen Koppelelementen notwendig sind. Dadurch erhält man einen einfach aufgebauten Schaltmechanismus.

Wählt man die Zähnezahlen der beiden Getriebestufen I und II vorteilhaft, ergibt sich bei beiden Stufen der gleiche Lochkreis-Durchmesser des Planetenradträgers. Dadurch ist ein einziger Planetenradträger 2 ausreichend, es müssen nicht zwei Planetenradträger vorgesehen werden. Außerdem wird nur ein einziger Zylinderstift für alle axial benachbarten Planetenräder beider Getriebestufen I und II verwendbar.

Wenn möglich, werden die Zähnezahlen so gewählt, dass kein Zylinderstift mit unterschiedlichen Lauf-Durchmessern und mit Absätzen verwendet werden muss. Wenn weiterhin alle mit einem Sonnenrad im Eingriff befindlichen Planetenräder eines Planetenradsatzes bezogen auf die Verzahnung im gleichen Drehwinkel am Sonnenrad eingreifen können, wird keine Lehre zur Montage der Getriebestufen benötigt. Diese Vorgaben zur Vereinfachung stellen natürlich immer einen Kompromiss zur Gesamtentfaltung und zu den Gangsprüngen der Getriebenabe dar.

Nachfolgend ist als Beispiel die Auslegung einer 9-Gang-Ausführung dargestellt, bei der alle Planetenstufen auf einem Zylinderstift gelagert werden können, ein einziger Planetenradträger ausreicht und nur die Underdrive-Getriebestufe eine Montagelehre erfordert. Die Gangsprünge und die Gesamtentfaltung entsprechend den aktuellen Marktbedingungen sind den folgenden Tabellen zu entnehmen.

### Dabei gehören

zum UnderDrive 1 das Sonnenrad 71, die Planetenräder 51;
zum UnderDrive 2 das Sonnenrad 72, die Planetenräder 52, das Hohlrad 3;
zum UnderDrive 3 das Sonnenrad 73, die Planetenräder 53;
zum OverDrive 1 das Sonnenrad 74, die Planetenräder 64, das Hohlrad 4;
zum OverDrive 2 das Sonnenrad 75, die Planetenräder 65.

| **Übersetzungen i und Zähnezahlen** | | | | |
|---|---|---|---|---|
| | **i** | **Sonnenrad** | **Planetenräder** | **Hohlrad** |
| UnderDrive 1 | 1,408 | 48 Z. | 21 Z. | |
| UnderDrive 2 | 1,643 | 54 Z. | 15 Z. | 84 Z. |
| UnderDrive 3 | 1,848 | 57 Z. | 12 Z. | |
| OverDrive 1 | 0,449 | 57 Z. | 12 Z. | |
| OverDrive 2 | 0,674 | 45 Z. | 24 Z. | 93 Z. |

| **Gang** | **Koppelung** | **i** | **i in%** | **delta i in %** |
|---|---|---|---|---|
| | | | | |
| 1 | UD3 | 1,848 | 54,1 % | |
| | | | | 13 % |
| 2 | UD2 | 1,643 | 60,9 % | |
| | | | | 17 % |
| 3 | UD1 | 1,408 | 71,0 % | |
| | | | | 13 % |
| 4 | UD3*OD2 | 1,246 | 80,3 % | |
| | | | | 13 % |
| 5 | UD2*OD2 | 1,107 | 90,3 % | |
| | | | | 17 % |
| 6 | UD1*OD2 | 0,949 | 105,4 % | |
| | | | | 14 % |
| 7 | UD3*OD1 | 0,830 | 120,4 % | |
| | | | | 13 % |
| 8 | UD2*OD1 | 0,738 | 135,5 % | |
| | | | | 17 % |
| 9 | UD1*OD1 | 0,633 | 158,1 % | |
| | | | | |
| | | | **292,1 %** | |

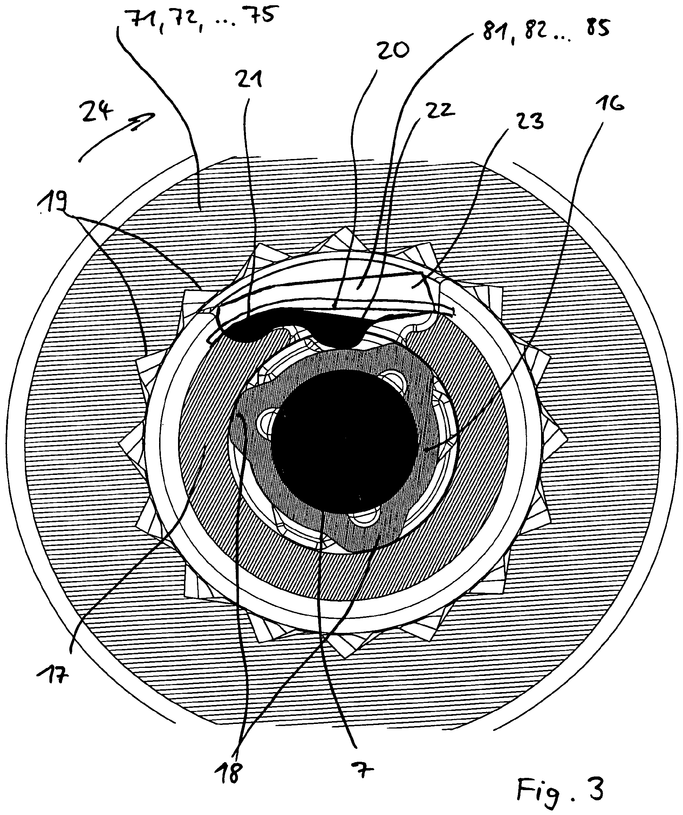

Fig. 3 zeigt einen Schnitt senkrecht zur Nabenachse 7 durch eines der Sonnenräder 71, 72,...75.

Ein Kupplungsträger 17 ist verdrehfest auf der Nabenachse 7 befestigt, der die Sonnenradkupplungen 81, 82,...85 zum Festsetzen der Sonnenräder 71, 72,...75 enthält und auf dessen Außen-Durchmesser die Sonnenräder laufen. Eine drehbare Schaltnockenhülse 16 zwischen Nabenachse 7 und Klinkenträger 17 steuert dann die Sonnenradkupplungen 81, 82,...85 ein oder aus. Die Sonnenradkupplungen 81, 82,...85 werden aktiv durch Schaltnocken 18 auf der Schaltnockenhülse 16 in den Eingriff mit Zähnen einer radial innen an den Sonnenrädern angeordneten Rastverzahnung 19 gebracht. Weiterhin ist je Sonnenradkupplung eine Kupplungsfeder 20 vorgesehen, die unterstützend wirkt, die Sonnenradkupplung außer Eingriff zu bringen, wenn die Sonnenradkupplung nicht durch einen Schaltnocken in Eingriff gehalten wird. Eine Sonnenradkupplung weist zwei Drehpunkte auf. Die Sonnenradkupplung dreht sich um den Abstützdrehpunkt 21, wenn ein Schaltnocken 18 unter den Kupplungsfuß 22 bewegt wird und die Sonnenradkupplung verschwenkt und das Eingriffsende 23 an der Sonnenradkupplung in den Eingriff mit der Rastverzahnung 19 bringt. Die Sonnenradkupplung dreht sich um den Kupplungsfuß 22, wenn ein Schaltnocken 18 unter den Kupplungsfuß 22 bewegt wird, die Sonnenradkupplung verschwenkt wird und das Eingriffsende 23 der Sonnenradkupplung nicht in den Eingriff mit der Rastverzahnung bringt. Diese Verhältnisse liegen auch vor, wenn sich der Schaltnocken 18 unter dem Kupplungsfuß 22 befindet und sich das Sonnenrad in Freilaufrichtung 24 gegenüber der Sonnenradkupplung bewegt. Dann führt die Sonnenradkupplung eine Wippbewegung um den Kupplungsfuß als Drehpunkt aus, wobei abwechselnd die eine Flanke der Rastverzahnung das Eingriffsende 23 oder die entgegengesetzte Flanke der Rastverzahnung 19 den zeitweilig sich radial nach außen bewegenden Abstützdrehpunkt 21 nach radial innen bewegen. Die Abstände der Rastzähne der Rastverzahnung 19 in Umfangsrichtung muß auf den Abstand zwischen Eingriffsende 23 und Abstützdrehpunkt 21 angepasst sein, damit zeitweilig ein gleichzeitiges Eintauchen von Eingriffsende 23 und Abstützdrehpunkt 21 in die Zahnzwischenräume an der Rastverzahnung 19 möglich ist.

Die Winkelverhältnisse am Eingriffsende 23 und in der Rastverzahnung 19 im Verhältnis zum Abstützdrehpunkt 21 sind so gewählt, dass nur geringe Kräfte beim Eingriff zwischen Eingriffsende 23 und Rastverzahnung 19 auf den Kupplungsfuß übertragen werden. Dadurch ist mit geringen Kräften ein Auskoppeln der Sonnenradkupplung möglich, was ein geringes notwendiges Drehmoment auf die Schaltnockenhülse 16 und letztendlich eine geringe Betätigungskraft an dem normalerweise am Lenker angebrachten Gangschalter bedeutet.

Da die Schaltnockenhülse 16 mit ihren Schaltnocken 18 auch bei stillstehenden Sonnenrädern unter den Sonnenradkupplungen durchgedreht werden kann, ergeben sich die Möglichkeiten des Umschaltens bei stillstehenden Pedalen und fehlender Antriebsbewegung und sogar im Stillstand des Fahrrades.

Die Fig. 2 zeigt einen Schnitt längs der Mittelachse der Nabenachse 7.

Die Schaltnockenhülse 16 ist hier zweiteilig ausgeführt, aber nur aus Montagegründen. Beide Teile der Schaltnockenhülse 16 drehen sich gemeinsam. Sie erstrecken sich über die gesamte axiale Länge unter den Sonnenrädern 71, 72,...75. Der Kupplungsträger 17 erstreckt sich ebenfalls über die gesamte axiale Länge unter den Sonnenrädern. Schaltnocken 18 greifen durch Öffnungen 26 im Kupplungsträger 17.

Ein Subsystem für die Zwischenspeicherung der Schaltzustände ist nicht notwendig, da die Kupplungsfedern 20 die jeweiligen Sonnenradkupplungen 81, 82,...85 außer Eingriff bringt, wenn im Stillstand des Fahrrades die Rastverzahnung 19 keine Relativdrehung gegenüber den Sonnenradkupplungen ausführt.

Die Rückholfeder 13 dreht die Schaltnockenhülse aus der Stellung zurück, in die sie durch die Wirkung eines nicht dargestellten Schaltbetätigungskabels gebracht worden ist. Dazu ist ein Ende fest in Bezug auf die Nabenachse 7 angeordnet, das andere Ende ist an der Schaltnockenhülse 16 eingehakt. Gleichzeitig drückt die Rückholfeder 13 den Kupplungsträger 17 an einen links befindlichen, nicht dargestellten Anschlag in eine definierte Stellung.

Das bevorzugte Ausführungsbeispiel ist mit aktiv einzukoppelnden Sonnenradkupplungen ausgeführt, die über zwei Drehpunkte verfügen. Es sind auch andere Schaltmechanismen mit radial bewegbaren Koppelelementen denkbar.

Die erfindungsgemäße Getriebenabe ist günstig herstellbar, mit einer Rücktrittbremse einer bekannten und bewährten Bauart kombinierbar, wobei die Betätigung der Rücktrittbremse unabhängig von der gewählten Gangstufe erfolgt. Außerdem können die Mittel zur Schaltbetätigung mit der Kopplung zu einem Schaltseilzug zwischen den Ausfallenden angeordnet werden, wo sie nicht seitlich vom Fahrrad abstehen und gegen Beschädigungen geschützt sind.

Durch die Verwendung von Sonnenradkupplungen, die auch unter Last nur geringe Schaltkräfte erfordern, kann ein Gangwechsel auch unter Last mit geringen Schaltbetätigungskräften vorgenommen werden.

Durch die Anzahl der Planetenstufen innerhalb der beiden Getriebestufen sind verschiedenste Gangzahlen, sinnvollerweise 4 - 12 Gänge, realisierbar.

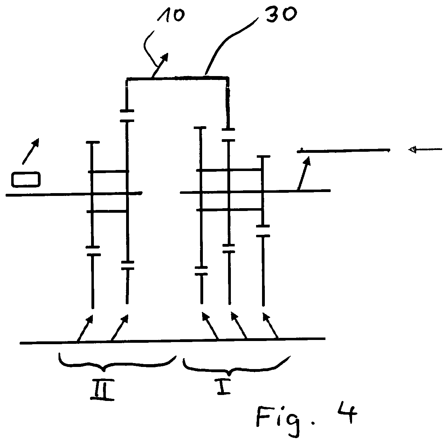

Die Fig. 4 zeigt eine alternative Ausführungsform einer erfindungsgemäßen Getriebenabe, bei der die Hohlräder gekoppelt sind, bzw. ein einziges Hohlrad sowohl mit Planetenrädern der ersten Getriebestufe I als auch der zweiten Getriebestufe II in Eingriff steht.

Es ist ersichtlich, dass zusätzlich der Hohlradfreilauf 10 zwischen Hohlrad 3 und Nabenhülse steuerbar ausgebildet sein muss. Auch ergeben sich andere Anforderungen für die Betätigung der Rücktrittbremse.

**Bezugszeichen**

| | | | |
|---|---|---|---|
| 1 | Antreiber | 10 | Hohlradfreilauf |
| 2a, 2b | Planetenradträger | 11 | Antreiberfreilaufkupplung |
| 3 | erstes Hohlrad | 12 | Bremsfreilauf |
| 4 | zweites Hohlrad | 13 | Vorwahl- bzw. Rückholfeder |
| 5 | erster Stufenplanetenradsatz | 14 | Lagerkonus |
| 51 | erster Planetenradsatz | 15 | Kugellager |
| 52 | zweiter Planetenradsatz | 16 | Schaltnockenhülse |
| 53 | dritter Planetenradsatz | 17 | Kupplungsträger |
| 6 | zweiter Stufenplanetenradsatz | 18 | Schaltnocken |
| 64 | vierter Planetenradsatz | 19 | Rastverzahnung |
| 65 | fünfter Planetenradsatz | 20 | Kupplungsfeder |
| 7 | Nabenachse | 21 | Abstützdrehpunkt |
| 71 | erstes Sonnenrad | 22 | Kupplungsfuß |
| 72 | zweites Sonnenrad | 23 | Eingriffsende |
| 73 | drittes Sonnenrad | 24 | Freilaufrichtung |
| 74 | viertes Sonnenrad | 25 | Öffnung |
| 75 | fünftes Sonnenrad | | |
| 81 | erste Sonnenradkupplung | | |
| 82 | zweite Sonnenradkupplung | I | Getriebestufe I |
| 83 | dritte Sonnenradkupplung | II | Getriebestufe II |
| 84 | vierte Sonnenradkupplung | | |
| 85 | fünfte Sonnenradkupplung | | |
| 9 | Planetenradträgerfreilauf | | |

## Patentansprüche

1. Mehrgang-Getriebenabe für Fahrräder mit zwei in Reihe geschalteten Getriebestufen (I, II), jeweils mit Planetenradgetriebe- Mechanik;
mit einem drehbar auf der Nabenachse (7) gelagerten Antreiber (1);
mit einer drehbar auf der Nabenachse (7) gelagerten Nabenhülse;
wobei die eine (II) der Getriebestufen eine Overdrive-Getriebestufe ist, mit einer am Getriebestufenausgang größeren Drehzahl als am Getriebestufeneingang ;
und wobei die andere (I) der Stufen eine Underdrive-Getriebestufe ist, mit einer am Getriebestufenausgang kleineren Drehzahl als am Getriebestufeneingang,
wobei sowohl die Overdrive- als auch die Underdrive-Getriebestufe jeweils mindestens ein mit einer Nabenachse (7) drehfest verbindbares Sonnenrad (71, 72, 73; 74, 75) und eine Sonnenradkupplung (81, 82, 83; 84, 85), mittels der das Sonnenrad und die Nabenachse (7) drehfest verbindbar sind, sowie in einem Planetenradträger (2a; 2b) drehbar gelagerte Planetenräder (51, 52, 53; 64, 65) und ein Hohlrad (3; 4) aufweisen;
wobei die beiden Getriebestufen (I, II) eine mit dem Antreiber (1) koppelbare Getriebestufe (I) sowie eine mit der Nabenhülse koppelbare Getriebestufe (II) umfassen;
wobei eine (I) der beiden Getriebestufen mehrere fein abgestufte Getriebestufenübersetzungen bereitstellt,
und wobei die andere (II) der beiden Getriebestufen mehrere grob abgestufte Getriebestufenübersetzungen bereitstellt;
und wobei die Mehrgang-Getriebenabe auf Basis der fein abgestuften Getriebestufenübersetzungen der einen Getriebestufe (I) und der grob abgestuften Getriebestufenübersetzungen der anderen Getriebestufe (II) eine Mehrzahl von Drehmoment vom Antreiber (1) zur Nabenhülse übertragenden Getriebegängen unterschiedlicher Übersetzungen bereitstellt;
**dadurch gekennzeichnet,**
**dass** in einer ersten der beiden Getriebestufen (I, II) keine der bereitgestellten, zur Bereitstellung der Mehrzahl von Drehmoment vom Antreiber (1) zur Nabenhülse übertragenden Getriebegängen dienenden Getriebestufenübersetzungen eine Direktgang-Getriebeübersetzung mit einem Übersetzungsverhältnis 1:1 ist und
**dass** die erste Getriebestufe die Getriebestufe (I) mit mehreren fein abgestuften Getriebestufenübersetzungen ist.

2. Mehrgang-Getriebenabe für Fahrräder nach Anspruch 1,
**dadurch gekennzeichnet,**
**dass** in der ersten Getriebestufe der Gangsprung, delta i, zwischen allen unmittelbar benachbarten Getriebestufenübersetzungen deutlich kleiner ist als ein fiktiver Gangsprung, delta i, zwischen dem nicht vorgesehenen Übersetzungsverhältnis 1:1 und der dem Übersetzungsverhältnis 1:1 wertmäßig nächstkommenden Getriebestufenübersetzung der ersten Getriebestufe.

3. Mehrgang-Getriebenabe für Fahrräder nach Anspruch 1 oder 2,
**dadurch gekennzeichnet,**
**dass** die mit dem Antreiber (1) gekoppelte Getriebestufe (I) als Underdrive-Getriebestufe ausgebildet ist;
und **dass** der Planetenradträger (2a) dieser Getriebestufe mit dem Planetenradträger (2b) der anderen Getriebestufe (II) gekoppelt ist.

4. Mehrgang-Getriebenabe für Fahrräder nach Anspruch 3,
**dadurch gekennzeichnet,**
**dass** die Planetenräder (51, 52, 53, 64, 65) der beiden Getriebestufen (I, II) in einem gemeinsamen Planetenradträger (2a, 2b) aufgenommen sind.

5. Mehrgang-Getriebenabe für Fahrräder nach Anspruch 4,
**dadurch gekennzeichnet,**
**dass** jeweils eine Planetenradachse die Planetenräder (51, 52, 53, 64, 65) der beiden Getriebestufen (I, II) in dem gemeinsamen Planetenradträger (2a, 2b) drehbar gegenüber dem Planetenradträger (2a, 2b) abstützt, wobei die auf der gleichen Planetenradachse drehbar abgestützten Planetenräder (51, 52, 53) der einen Getriebestufe (I) drehfest miteinander verbunden sind und die auf der gleichen Planetenradachse drehbar abgestützten Planetenräder (64, 65) der anderen Getriebestufe (II) drehfest miteinander verbunden sind.

6. Mehrgang-Getriebenabe für Fahrräder nach Anspruch 5,
**dadurch gekennzeichnet,**
**dass** die Anzahl der auf einer Planetenradachse angeordneten Planetenräder der Underdrive-Getriebestufe (I) größer als oder gleich groß wie die Anzahl der Planetenräder der Overdrive-Getriebestufe (II) ist.

7. Mehrgang-Getriebenabe für Fahrräder nach einem der Ansprüche 3 bis 6,
**dadurch gekennzeichnet,**
**dass** ein Bremsfreilauf (12) funktionell zwischen dem Antreiber (1) und dem Planetenradträger (2a) der Underdrive-Getriebestufe angeordnet ist.

8. Mehrgang-Getriebenabe für Fahrräder nach Anspruche 1 oder 2,
**dadurch gekennzeichnet,**
**dass** die mit dem Antreiber (1) gekoppelte Getriebestufe als Overdrive-Getriebestufe ausgebildet ist;
und **dass** das Hohlrad dieser Getriebestufe mit dem Hohlrad der anderen Getriebestufe gekoppelt ist oder mit diesem ein gemeinsames Hohlrad (30) bildet.

9. Mehrgang-Getriebenabe für Fahrräder nach einem der Ansprüche 3 bis 8,
**dadurch gekennzeichnet,**
**dass** die umschaltbaren Kupplungen (81, 82, ....85) zur Erzeugung mehrerer Getriebeübersetzungen in Vorwärtsdrehrichtung mit der Nutzung von unterschiedlichen Momentenpfaden in der Planetengetriebe-Mechanik ausschließlich Kupplungen zwischen den Sonnenrädern (71, 72,...75) und der Nabenachse (7) sind, um die Sonnenräder (71, 72,...75) in einer Drehrichtung drehfest gegenüber der Nabenachse (7) festzulegen.

10. Mehrgang-Getriebenabe für Fahrräder nach Anspruch 9,
**dadurch gekennzeichnet,**
**dass** die schaltbaren Sonnenradkupplungen (81, 82,...85), die sich gegenüber der Nabenachse (7) in Umfangsrichtung abstützen, ausschließlich radial beweglich und damit schaltbar sind;
wobei eine drehbar um die Nabenachse (7) angeordnete Schaltnockenhülse (16) der Steuerung aller schaltbar ausgebildeten Sonnenradkupplungen dient.

11. Mehrgang-Getriebenabe für Fahrräder nach Anspruch 10,
**dadurch gekennzeichnet,**
**dass** die Sonnenradkupplungen durch Schaltnocken (18) an der Schaltnockenhülse (16) nach radial außen um einen Abstützdrehpunkt (21) verschwenkt werden, um mit ihrem Eingriffsende (23) in die Rastverzahnung (19) am radial außerhalb angeordneten Sonnenrad (71, 72,...75) einzugreifen, wobei bei einer Relativdrehung der Rastverzahnung (19) gegenüber der Sonnenradkupplung (81, 82,...85) in Freilaufrichtung (24) die Sonnenradkupplung (81, 82,...85) um ihren Kupplungsfuß (22) verschwenkt und von der Rastverzahnung (19) überlaufen wird.

12. Mehrgang-Getriebenabe für Fahrräder nach einem der Ansprüche 3 bis 11,
**dadurch gekennzeichnet,**
**dass** die Mittel zum Herstellen der Drehkopplung zwischen den Sonnenrädern (71, 72, 75) und der Nabenachse (7) einschließlich der Sonnenradkupplungen (81, 82,...85) in den zugehörigen axialen Abschnitten der Sonnenräder (71, 72,...75) angeordnet sind, in denen auch die Planetenradverzahnungen ausgebildet sind, wofür alle Sonnenräder (71, 72,...75) einer Getriebestufe eine hinreichen große Zähnezahl und folglich einen hinreichend großen Außendurchmesser haben.

13. Mehrgang-Getriebenabe für Fahrräder nach einem der Ansprüche 3 bis 12,
**dadurch gekennzeichnet,**
**dass** ein Kupplungsträger (17) drehfest zur Nabenachse (7) ausgebildet ist und der Lagerung der Sonnenradkupplungen (81, 82, ...85) dient.

14. Mehrgang-Getriebenabe für Fahrräder nach Anspruch 13 und Anspruch 10,
**dadurch gekennzeichnet,**
**dass** die Schaltnockenhülse (16) radial zwischen der Nabenachse (7) und dem Kupplungsträger (17) angeordnet ist.

## Claims

1. Multiple gear hub for bicycles with two transmission stages (I, II) connected in series, each with a planetary gear mechanism:
with a driver (1) rotatably mounted on the hub shaft (7);
with a hub sleeve rotatably mounted on the hub shaft (7);
wherein one (II) of the transmission stages is an overdrive transmission stage with a higher rotation speed at the transmission stage output than at the transmission stage input;
and wherein the other (I) of the stages is an underdrive transmission stage with a lower rotation speed at the transmission stage output than at the transmission stage input;
wherein both the overdrive and the underdrive transmission stages each comprise at least one sun wheel (71, 72, 73; 74, 75) which can be connected rotationally fixedly to a hub shaft (7), a sun wheel coupling (81, 82, 83; 84, 85) by means of which the sun wheel and the hub shaft (7) can be connected rotationally fixedly, planet wheels (51, 52, 53; 64, 65) which are mounted rotatably in a planet wheel carrier (2a; 2b), and a crown wheel (3; 4);
wherein the two transmission stages (I, II) comprise a transmission stage (I) which can be coupled to the driver (1) and a transmission stage (II) which can be coupled to the hub sleeve;
wherein one (I) of the two transmission stages provides several finely stepped transmission stage translation ratios;
and wherein the other (II) of the two transmission stages provides several widely stepped transmission stage translation ratios;
and wherein the multiple gear hub provides a plurality of gear stages of different translation ratios transmitting torque from the driver (1) to the hub sleeve on the basis of the finely stepped transmission stage translation ratios of the one transmission stage (I) and the widely stepped transmission stage translation ratios of the other transmission stage (II);
**characterised in that**
in a first of the two transmission stages (I, II), none of the transmission stage translation ratios provided, which serve to provide the plurality of gear stages transmitting torque from the driver (1) to the hub sleeve, is a direct gear transmission translation ratio with a translation ratio of 1:1, and
the first transmission stage is the transmission stage (I) with several finely stepped transmission stage translation ratios.

2. Multiple gear hub for bicycles according to claim 1,
**characterised in that**
in the first transmission stage, the gear jump (delta i) between all directly adjacent transmission stage translation ratios is significantly smaller than a theoretical gear jump (delta i) between the translation ratio 1:1 (not provided) and the next transmission stage translation ratio of the first transmission stage which is closest to the translation ratio 1:1 in value terms.

3. Multiple gear hub for bicycles according to claim 1 or 2,
**characterised in that**
the transmission stage (I) coupled to the driver (1) is configured as an underdrive transmission stage;
and that the planet wheel carrier (2a) of this transmission stage is coupled to the planet wheel carrier (2b) of the other transmission stage (II).

4. Multiple gear hub for bicycles according to claim 3,
**characterised in that**
the planet wheels (51, 52, 53, 64, 65) of the two transmission stages (I, II) are received in a common planet wheel carrier (2a, 2b).

5. Multiple gear hub for bicycles according to claim 4,
**characterised in that**
a respective planet wheel shaft supports the planet wheels (51, 52, 53, 64, 65) of the two transmission stages (I, II) in the common planet wheel carrier (2a, 2b) so that they are rotatable relative to the planet wheel carrier (2a, 2b), wherein the planet wheels (51, 52, 53) of the one transmission stage (I) which are supported rotatably on the same planet wheel shaft are connected together in a rotationally fixed fashion, and the planet wheels (64, 65) of the other transmission stage (II) which are supported rotatably on the same planet wheel shaft are connected together in a rotationally fixed fashion.

6. Multiple gear hub for bicycles according to claim 5,
**characterised in that**
the number of planet wheels of the underdrive transmission stage (I) which are arranged on a planet wheel shaft is greater than or equal to the number of planet wheels of the overdrive transmission stage (II).

7. Multiple gear hub for bicycles according to any of claims 3 to 6,
**characterised in that**
a braking freewheel device (12) is arranged functionally between the driver (1) and the planet wheel carrier (2a) of the underdrive transmission stage.

8. Multiple gear hub for bicycles according to claim 1 or 2,
**characterised in that**
the transmission stage coupled to the driver (1) is configured as an overdrive transmission stage;
and that the crown wheel of this transmission stage is coupled to the crown wheel of the other transmission stage or together therewith forms a common crown wheel (30).

9. Multiple gear hub for bicycles according to any of claims 3 to 8,
**characterised in that**
the switchable couplings (81, 82, ...85) for generating multiple transmission translation ratios in the forwards rotation direction using different moment paths in the planetary gear mechanism are exclusively couplings between the sun wheels (71, 72, ...75) and the hub shaft (7) in order to establish the sun wheels (71, 72, ...75) in a rotationally fixed fashion relative to the hub shaft (7) in one rotation direction.

10. Multiple gear hub for bicycles according to claim 9,
**characterised in that**
the switchable sun wheel couplings (81, 82, ...85) which rest against the hub shaft (7) in the circumferential direction are movable exclusively radially and hence are switchable;
wherein a switching cam sleeve (16) which is arranged so as to be rotatable about the hub shaft (7) serves to control all sun wheel couplings which are configured so as to be switchable.

11. Multiple gear hub for bicycles according to claim 10,
**characterised in that**
the sun wheel couplings are pivoted radially outwardly about a support rotation point (21) by switching cams (18) on the switching cam sleeve (16) in order to engage with their engagement end (23) in the locking toothing (19) on the radially outwardly arranged sun wheel (71, 72, ...75), wherein on a relative twist of the locking toothing (19) in the freewheel direction (24) relative to the sun wheel coupling (81, 82, ...85), the sun wheel coupling (81, 82, ...85) pivots about its coupling foot (22) and the locking toothing (19) passes over it.

12. Multiple gear hub for bicycles according to any of claims 3 to 11,
**characterised in that**
the means for creating the rotational coupling between the sun wheels (71, 72, 75) and the hub shaft (7), including the sun wheel couplings (81, 82, ...85), are arranged in the associated axial portions of the sun wheels (71, 72,...75) in which the planetary gear toothings are also formed, wherein all sun wheels (71, 72, ...75) of a transmission stage have a sufficiently large number of teeth and consequently a sufficiently large outer diameter.

13. Multiple gear hub for bicycles according to any of claims 3 to 12,
**characterised in that**
a coupling carrier (17) is formed so as to be rotationally fixed relative to the hub shaft (7) and serves for mounting the sun wheel couplings (81, 82, ...85).

14. Multiple gear hub for bicycles according to claim 13 and claim 10,
**characterised in that**
the switching cam sleeve (16) is arranged radially between hub shaft (7) and the coupling carrier (17).

## Revendications

1. Moyeu d'engrenage multivitesse pour vélos avec deux étages d'engrenage (I, II) montés en série, respectivement avec un mécanisme d'engrenage à roue planétaire ; avec un entraîneur (1) logé de manière à pouvoir tourner sur l'axe de moyeu (7) ; avec une douille de moyeu logée de manière à pouvoir tourner sur l'axe de moyeu (7) ;
dans lequel l'un (II) des étages d'engrenage est un étage d'engrenage à surmultiplication, avec un nombre de tours plus grand au niveau de la sortie d'étage d'engrenage qu'au niveau de l'entrée d'étage d'engrenage ;
et dans lequel l'autre (I) des étages est un étage d'engrenage à sous-multiplication, avec un nombre de tours plus petit au niveau de la sortie d'étage d'engrenage qu'au niveau de l'entrée d'étage d'engrenage,
dans lequel aussi bien l'étage d'engrenage à surmultiplication que celui à sous-multiplication présentent respectivement au moins une roue solaire (71, 72, 73 ; 74, 75) pouvant être raccordée solidairement en rotation à un axe de moyeu (7) et un accouplement de roue solaire (81, 82, 83 ; 84, 85) au moyen duquel la roue solaire et l'axe de moyeu (7) peuvent être raccordés solidairement en rotation, ainsi que des roues planétaires (51, 52, 53 ; 64, 65) logées de manière à pouvoir tourner dans un support de roue planétaire (2a ; 2b) et une roue creuse (3 ; 4) ;
dans lequel les deux étages d'engrenage (I, II) comportent un étage d'engrenage (I) pouvant être accouplé à l'entraîneur (1) ainsi qu'un étage d'engrenage (II) pouvant être accouplé à la douille de moyeu ;
dans lequel un (I) des deux étages d'engrenage met à disposition plusieurs transmissions d'étage d'engrenage échelonnées finement,
et dans lequel l'autre (II) des deux étages d'engrenage met à disposition plusieurs transmissions d'étage d'engrenage échelonnées grossièrement ;
et dans lequel le moyeu d'engrenage multivitesse met à disposition sur la base des transmissions d'étage d'engrenage échelonnées finement de l'un étage d'engrenage (I) et des transmissions d'étage d'engrenage échelonnées grossièrement de l'autre étage d'engrenage (II) une pluralité de rapports d'engrenage de différentes transmissions transmettant le couple de l'entraîneur (1) à la douille de moyeu ; **caractérisé en ce**
**que** dans un premier des deux étages d'engrenage (I, II) aucune des transmissions d'étage d'engrenage mises à disposition servant à la mise à disposition de la pluralité de rapports d'engrenage transmettant le couple de l'entraîneur (1) à la douille de moyeu n'est une transmission d'engrenage de rapport direct avec un rapport de transmission 1:1 et
**que** le premier étage d'engrenage est l'étage d'engrenage (I) avec plusieurs transmissions d'étage d'engrenage échelonnées finement.

2. Moyeu d'engrenage multivitesse pour vélos selon la revendication 1,
**caractérisé en ce**
**que** dans le premier étage d'engrenage le saut de vitesse, delta i, est nettement inférieur entre toutes les transmissions d'étage d'engrenage directement contiguës à un saut de vitesse fictif, delta i, entre le rapport de transmission non prévu 1:1 et la transmission d'étage d'engrenage le plus proche en valeur du rapport de transmission 1:1 du premier étage d'engrenage.

3. Moyeu d'engrenage multivitesse pour vélos selon la revendication 1 ou 2,
**caractérisé en ce**
**que** l'étage d'engrenage (I) accouplé à l'entraîneur (1) est réalisé en tant qu'étage d'engrenage à sous-multiplication ;
et **que** le support de roue planétaire (2a) de cet étage d'engrenage est accouplé au support de roue planétaire (2b) de l'autre étage d'engrenage (II).

4. Moyeu d'engrenage multivitesse pour vélos selon la revendication 3,
**caractérisé en ce**
**que** les roues planétaires (51, 52, 53, 64, 65) des deux étages d'engrenage (I, II) sont reçues dans un support de roue planétaire commun (2a, 2b).

5. Moyeu d'engrenage multivitesse pour vélos selon la revendication 4,
**caractérisé en ce**
**que** respectivement un axe de roue planétaire soutient les roues planétaires (51, 52, 53, 64, 65) des deux étages d'engrenage (I, II) dans le support de roue planétaire commun (2a, 2b) de manière à pouvoir tourner par rapport au support de roue planétaire (2a, 2b), dans lequel les roues planétaires (51, 52, 53) de l'un étage d'engrenage (I) soutenues de manière à pouvoir tourner sur le même axe de roue planétaire sont raccordées entre elles solidairement en rotation et les roues planétaires (64, 65) de l'autre étage d'engrenage (II) soutenues sur le même axe de roue planétaire de manière à pouvoir tourner sont raccordées solidairement en rotation entre elles.

6. Moyeu d'engrenage multivitesse pour vélos selon la revendication 5,
**caractérisé en ce**
**que** le nombre des roues planétaires de l'étage d'engrenage à sous-multiplication (I) agencées sur un axe de roue planétaire est plus grand ou égal au nombre des roues planétaires de l'étage d'engrenage à surmultiplication (II).

7. Moyeu d'engrenage multivitesse pour vélos selon l'une quelconque des revendications 3 à 6,
**caractérisé en ce**
**qu'**une roue libre de frein (12) est agencée fonctionnellement entre l'entraîneur (1) et le support de roue planétaire (2a) de l'étage d'engrenage à sous-multiplication.

8. Moyeu d'engrenage multivitesse pour vélos selon la revendication 1 ou 2,
**caractérisé en ce**
**que** l'étage d'engrenage accouplé à l'entraîneur (1) est réalisé en tant qu'étage d'engrenage à surmultiplication ;
et **que** la roue creuse de cet étage d'engrenage est accouplée à la roue creuse de l'autre étage d'engrenage ou forme avec celle-ci une roue creuse (30) commune.

9. Moyeu d'engrenage multivitesse pour vélos selon l'une quelconque des revendications 3 à 8,
**caractérisé en ce**
**que** les accouplements (81, 82, ...85) commutables sont pour la génération de plusieurs transmissions d'engrenage dans le sens de rotation vers l'avant en utilisant différents parcours de couple dans le mécanisme d'engrenage planétaire à l'exclusion d'accouplements entre les roues solaires (71, 72, ...75) et l'axe de moyeu (7) afin de fixer les roues solaires (71, 72, ...75) dans un sens de rotation solidairement en rotation par rapport à l'axe de moyeu (7).

10. Moyeu d'engrenage multivitesse pour vélos selon la revendication 9,
**caractérisé en ce**
**que** les accouplements de roue solaire (81, 82, ...85) commutables qui s'appuient par rapport à l'axe de moyeu (7) dans le sens périphérique, sont mobiles exclusivement radialement et ainsi sont commutables ;
dans lequel une douille de came de commutation (16) agencée de manière à pouvoir tourner autour de l'axe de moyeu (7) sert à la commande de tous les accouplements de roue solaire réalisés de manière commutable.

11. Moyeu d'engrenage multivitesse pour vélos selon la revendication 10,
**caractérisé en ce**
**que** les accouplements de roue solaire sont pivotés par des cames de commutation (18) sur la douille de came de commutation (16) radialement vers l'extérieur autour d'un point de rotation d'appui (21) afin de venir en prise avec son extrémité de mise en prise (23) dans la denture d'encliquetage (19) sur la roue solaire (71, 72, ...75) agencée radialement vers l'extérieur, dans lequel en cas de rotation relative de la denture d'encliquetage (19) par rapport à l'accouplement de roue solaire (81, 82, ...85) dans le sens de la roue libre (24) l'accouplement de roue solaire (81, 82, ...85) est pivoté autour de son pied d'accouplement (22) et est dépassé par la denture d'encliquetage (19).

12. Moyeu d'engrenage multivitesse pour vélos selon l'une quelconque des revendications 3 à 11,
**caractérisé en ce**
**que** les moyens pour la fabrication de l'accouplement rotatif sont agencés entre les roues solaires (71, 72, 75) et l'axe de moyeu (7) y compris des accouplements de roue solaire (81, 82, ...85) dans les sections axiales afférentes des roues solaires (71, 72, ...75), dans lesquelles les dentures de roue planétaire sont aussi réalisées, moyennant quoi toutes les roues solaires (71, 72, ...75) d'un étage d'engrenage présentent un nombre de dents suffisamment grand et par conséquent un diamètre extérieur suffisamment grand.

13. Moyeu d'engrenage multivitesse pour vélos selon l'une quelconque des revendications 3 à 12,
**caractérisé en ce**
**qu'**un support d'accouplement (17) est réalisé solidairement en rotation par rapport à l'axe de moyeu (7) et sert au logement des accouplements de roue solaire (81, 82, ...85).

14. Moyeu d'engrenage multivitesse pour vélos selon la revendication 13 et la revendication 10,
**caractérisé en ce**
**que** la douille de came de commutation (16) est agencée radialement entre l'axe de moyeu (7) et le support d'accouplement (17).
